# EUROPEAN PATENT SPECIFICATION

(11) **EP 1 875 540 B1**
(45) Date of publication and mention of the grant of the patent: **05.01.2011**
(21) Application number: 06749551.5
(22) Date of filing: 10.04.2006
(51) Int. Cl.: H01M 6/16, H01M 4/58

(54) **NON-AQUEOUS ELECTROLYTIC SOLUTION**
NICHTWÄSSRIGE ELEKTROLYTLÖSUNG
SOLUTION ELECTROLYTIQUE NON AQUEUSE

(30) Priority: 25.04.2005 US 113823; 25.04.2005 US 113966; 03.08.2005 US 196782
(43) Date of publication of application: 09.01.2008
(73) Proprietor: Novolyte Technologies Inc., Zachary, LA 70791 (US)
(72) Inventor: XU, Wu, Broadview Heights, Ohio 44147 (US); DENG, Zhongyi, Valley View, Ohio 44125 (US); BOLOMEY, Pascal, Solon, Ohio 44139 (US); ZHANG, Yali Research and Development Center, Shenzhen 518119 (CN)
(74) Representative: Gille Hrabal Struck Neidlein Prop Roos
(86) International application number: PCT/US2006/013113
(87) International publication number: WO 2006/115737

(56) References cited:
- WO-A2-01/99209
- US-A1- 2004 076 887
- US-A1- 2005 202 320

## Description

### BACKGROUND OF THE INVENTION

This application claims priority to commonly owned copending U.S. Ser. No 11/113,823 entitled "NON-AQUEOUS ELECTROLYTIC SOLUTION"; U.S. Ser. No. 11/113,966 entitled "NON-AQUEOUS ELECTROLYTIC SOLUTION WITH MIXED SALTS," both filed 25 April 2005 and U.S. Ser. No. 11/196,782 entitled "NON-AQUEOUS ELECTROLYTIC SOLUTION," filed 3 August 2005. All of which are hereby incorporated herein by reference in their entireties.

### 1. Field of Invention

The present invention relates to a field of nonaqueous electrolytic solutions and a secondary battery using the same. More particularly, this invention pertains to nonaqueous electrolytic solutions that comprise (a) one or more solvents; (b) one or more ionic salts; and (c) one or more additives. The present invention pertains to secondary batteries comprising such nonaqueous electrolytic solutions, and particularly to methods of making nonaqueous electrolytic solutions with a salt additive for use in lithium and lithium ion rechargeable batteries.

### 2. Description of Related Art

Safety issues come into play for all batteries, even under normal conditions and more importantly, under extreme service conditions. Safety is a greater factor for high energy density batteries such as lithium ion batteries since they are more sensitive to certain types of abuse, particularly overcharge abuse wherein the normal operating voltage is exceeded during recharge. During overcharge, excessive lithium is extracted (i.e., more deintercalation than is needed to transfer charge within the normal operating parameters of the battery) from the cathode with a corresponding excessive insertion or even plating of lithium at the anode. This can make both electrodes less thermally stable. Overcharge also results in heating of the battery since much of the input energy is dissipated rather than stored. The decrease in thermal stability combined with battery heating can lead to thermal runaway and explode or catch fire on overcharge, especially because the carbonate solvents used in the electrolyte are flammable.

Many lithium ion battery manufacturers have incorporated additional safety devices as a greater level of protection against overcharge. Pressure safety valves or pressure activated disconnect devices are commonly used in the batteries, especially in cylindrical cells. The internal pressure of the battery is maintained below the predetermined value over the range of normal operating conditions. However, when the internal pressure exceeds the predetermined value because additives decompose and produce excess gas, the excess pressure activates the pressure safety valves, thereby shutting down the battery.

One conventional approach to overcharge protection has been the use of certain aromatic compounds as additives. For instance, U.S. Patent 6,033,797 to Mao, et al., describes the use of biphenyl to prevent overcharge abuse, and U.S. Patent 6,045,945 to Hamamoto, et al., describes the use of aromatic compounds including cyclohexylbenzene to prevent the overcharge abuse. Both patents are hereby incorporated by reference herein. However, the aromatic compound additives have certain negative effects on battery performance, e.g., increasing the resistance of the battery. Such additives can also affect on the cycle life and capacity of the battery. To ensure that the battery will shut down when it exceeds the normal operating voltage, it is conventional to increase the concentration of overcharge prevention additive, especially in high energy density cells. The concentration of biphenyl and/or cyclohexylbenzene sometimes can be as high as 5%. With such a high additive concentration other performance parameters such as capacity and/or cycle life can be adversely affected. In order to compensate for the negative effects of such additives, certain vinyl compounds such as vinylene carbonate (VC) and vinyl ethylene carbonate (VEC) have been added to electrolytic solutions to help generate a good SEI layer on anode so as to improve the cycle life of the battery. However, the amount of these vinyl additives should be used only to the extent of several percent because at higher levels, such additives begin to decompose at the cathode, which may have negative effects on battery performance. In addition, VC is very expensive. Its addition will considerably increase the cost of the electrolyte, and thus the battery. Hence, there is room for improvement in the selection of an overcharge protection additive for use in secondary batteries.

### SUMMARY OF THE INVENTION

In recent years, lithium bis(oxalato)borate (LiBOB), has been studied extensively. It has been found that electrolytic solutions based on LiBOB and propylene carbonate (PC) in graphite lithium ion battery systems exhibit very good cell performance because LiBOB generates a good SEI on graphite anodes. The inventors herein have discovered that the use of LiBOB as an additive in electrolytic solutions (e.g., LiPF₆-EC-PC based solutions, LiBF₄ based solutions, etc.), improves battery performance by several key measures. Further, low temperature performance is improved because the eutectic temperature of the EC-PC based system is decreased by the addition of PC which has a high polarity, similar to that of EC.
Thus, the present invention provides a method of preventing overcharge in a lithium secondary battery comprising providing an electrolytic solution comprising
(a) a lithium salt of chelated orthoborates in a concentration of about 0.001 M to about 2 M;
(b) a lithium salt different from the salt in (a) in a concentration of about 0.7 to about 1.6 M; and
(c) a non-aqueous solvent, selected from the group consisting of ethylene carbonate, propylene carbonate, butylene carbonate, dimethyl carbonate, diethyl carbonate, dipropyl carbonate, dibutyl carbonate, ethyl methyl carbonate, methyl propyl carbonate, ethyl propyl carbonate, tetrahydrofuran, 2-methyl tetrahydrofuran, 1,3-dioxolane, 1,4-dioxane, 1,2-dimethoxyethane, 1,2-diethoxyethane, 1,2-dibutoxyethane, acetonitrile, dimethylformamide, methyl formate, ethyl formate, propyl formate, butyl formate, methyl acetate, ethyl acetate, propyl acetate, butyl acetate, methyl propionate, ethyl propionate, propyl propionate, butyl propionate, methyl butyrate, ethyl butyrate, propyl butyrate, butyl butyrate, γ-butyrolactone, 2-methyl-y-butyrolactone, 3-methyl-y-butyrolactone, 4-methyl-γ-butyrolactone, β-propiolactone, δ-valerolactone, trimethyl phosphate, triethyl phosphate, tris(2-chloroethyl) phosphate, tris(2,2,2-trifluoroethyl) phosphate, tripropyl phosphate, triisopropyl phosphate, tributyl phosphate, trihexyl phosphate, triphenyl phosphate, tritolyl phosphate, and combinations thereof.
The present invention provides a method of preventing overcharge in lithium batteries or lithium ion batteries, and a rechargeable battery using the same.

Suitable lithium electrolyte salts include LiPF₆, LiBF₄, and others, while typical solvents include, without limitation, ethylene carbonate (EC), propylene carbonate (PC), dimethyl carbonate (DMC), diethyl carbonate (DEC), ethylmethyl carbonate (EMC), γ-butyrolactone (GBL), methyl butyrate (MB), propyl acetate (PA), trimethyl phosphate (TMP), triphenyl phosphate (TPP), and combinations thereof. The use of LiBOB as an additive in electrolytic solutions has been found useful in preventing overcharge in secondary batteries.

### DETAILED DESCRIPTION OF THE INVENTION

The following embodiments describe the preferred mode presently contemplated for carrying out the invention and are not intended to describe all possible modifications and variations consistent with the spirit and purpose of the invention. These and other features and advantages of the present invention will become more readily apparent to those skilled in the art upon consideration of the following detailed description that described both the preferred and alternative embodiments of the present invention.

The concentration of traditional overcharge-protection additives could be lowered significantly by properly selecting enhancer compounds to include in conjunction with the aromatic additives. Lithium bis(oxalato)borate (LiBOB) is an excellent additive for long life cycling and high capacity retention. While not wishing to be bound by theory, it is believed that, at a voltage of about 4.5V, LiBOB begins to decompose and form gases (mainly CO₂ and CO) and a coating of solid salts, which are both insoluble and nonconductive, at the surface of the cathode. As previously mentioned, the gases formed by the decomposition of LiBOB will increase the internal pressure, which disconnects pressure safety valves, thereby improving the safety performance of the batteries under overcharge abuse conditions

The invention provides a method of preventing overcharge in a lithium secondary battery comprising providing an electrolytic solution comprising a non-aqueous solvent, a solute, and a salt additive selected from the group consisting of chelated orthoborate salts, an anode, a cathode, and combining the electrolytic solution, anode, and cathode into a battery. The invention further provides a method of preventing overcharge in a lithium secondary battery comprising providing lithium bis(oxalato)borate, a non-aqueous electrolytic solution, an anode, a cathode and a first salt, provided that lithium bis(oxalato)borate is present at a concentration not exceeding 2.0 M (moles per liter), preferably not exceeding 1.5 M.

**Solute.** The term solute comprehends an ionic substance (salt) used herein to transfer charge between the anode and the cathode of a battery. Broadly, the solute of the invention comprises a lithium salt. As the solute, useful salts herein include LiPF₆, LiBF₄, LiClO₄, LiAsF₆, LiTaF₆, LiAlCl₄, Li₂B₁₀Cl₁₀, LiCF₃SO₃; LiN(SO₂CₘF₂ₘ₊₁)(SO₂CₙF₂ₙ₊₁), and LiC(SO₂CₖF₂ₖ₊₁)(SO₂CₘF₂ₘ₊₁)(SO₂CₙF₂ₙ₊₁), wherein k = 1-10, m =1-10, and n =1-10, respectively; LiN(SO₂CₚF₂ₚSO₂), and LiC(SO₂CₚF₂ₚSO₂)(SO₂C_{q}F_{2q+1}) wherein p = 1-10 and q =1-10; LiPFₓ(R_{F})₆₋ₓ and LiBF_{y}(R_{F})_{4-y}, wherein R_{F} represents perfluorinated C₁-C₂₀ alkyl groups or perfluorinated aromatic groups, x = 0-5, and y = 0-3. Combinations of the aforementioned salts may be used. Broadly, the concentration of the solute in the electrolytic solution is about 0.1-2.5 M. The solute concentration is 0.7-1.6 M. In a more preferred embodiment, the electrolytic solution comprises 1.0M LiPF₆.

**Salt Additive.** The additive herein is an ionic substance (salt) used to help generate the solid electrolyte interface (SEI) at the surface of the anode and to help protect the battery when the battery is overcharged. Broadly, the salt additive of the invention comprises salts of chelated orthoborates. The cations of the salt additives can be selected from alkali metal ions, alkaline earth metal ions, transition metal ions and oniums. In a preferred embodiment, the salt additive is LiBOB. Other salt additives may be used as well, either instead of or in addition to, LiBOB, for example, lithium bis(malonato) borate (LiBMB), lithium bis(difluoromalonato) borate (LiBDFMB), lithium (malonato oxalato) borate (LiMOB), and lithium (difluoromalonato oxalato) borate (LiDFMOB).

Preferably, the salt additive is present in the electrolytic solution at a concentration of about 0.001 M to about 2 M. More preferably the salt additive concentration is about 0.01 M to about 1.5 M, still more preferably about 0.01 M to about 1 M, and even more preferably about 0.01 to about 0.7 M. The preferred salt additive is LiBOB.

**Solvent.** The solvent is a non-aqueous, aprotic, polar organic substance which dissolves the solute and salt additive. Blends of more than one solvent may be used. Generally, solvents may be carbonates, carboxylates, lactones, phosphates, five or six member heterocyclic ring compounds, and organic compounds having at least one C₁-C₄ group connected through an oxygen atom to a carbon. Lactones may be methylated, ethylated and/or propylated. Generally, the electrolytic solution comprises at least one solute dissolved in at least one solvent. Solvents used herein include ethylene carbonate, propylene carbonate, butylene carbonate, dimethyl carbonate, diethyl carbonate, dipropyl carbonate, dibutyl carbonate, ethyl methyl carbonate, methyl propyl carbonate, ethyl propyl carbonate, tetrahydrofuran, 2-methyl tetrahydrofuran, 1,3-dioxolane, 1,4-dioxane, 1,2-dimethoxyethane, 1,2-diethoxyethane, 1,2-dibutoxyethane, acetonitrile, dimethylformamide, methyl formate, ethyl formate, propyl formate, butyl formate, methyl acetate, ethyl acetate, propyl acetate, butyl acetate, methyl propionate, ethyl propionate, propyl propionate, butyl propionate, methyl butyrate, ethyl butyrate, propyl butyrate, butyl butyrate, γ-butyrolactone, 2-methyl-γ-butyrolactone, 3-methyl-γ-butyrolactone, 4-methyl-γ-butyrolactone, β-propiolactone, δ-valerolactone, trimethyl phosphate, triethyl phosphate, tris(2-chloroethyl) phosphate, tris(2,2,2-trifluoroethyl) phosphate, tripropyl phosphate, triisopropyl phosphate, tributyl phosphate, trihexyl phosphate, triphenyl phosphate, tritolyl phosphate, and combinations thereof.

In a preferred embodiment, the solvent is selected from the group consisting of ethylene carbonate, propylene carbonate, diethyl carbonate, γ-butyrolactone and combinations thereof. In a further preferred embodiment, the solvent comprises about 1-50 wt % ethylene carbonate, about 1-50 wt % diethyl carbonate and about 1-80 wt % ethyl methyl carbonate. In another preferred embodiment, the solvent comprises about 1-50 wt % ethylene carbonate, about 1-50 wt % diethyl carbonate and about 1-80 wt % γ-butyrolactone.

**Anode.** The anode may comprise carbon or compounds of lithium. The carbon may be in the form of graphite. Lithium metal anodes may be used. Lithium (mixed) metal oxides (LiMMOs) such as LiMnO₂ and Li₄Ti₅O₁₂ are also envisioned. Alloys of lithium with transition or other metals (including metalloids) may be used, including LiAl, LiZn, Li₃Bi, Li₃Cd, Li₃Sb, Li₄Si, Li_{4.4}Pb, Li_{4.4}Sn, LiC₆, Li₃FeN₂, Li_{2.6}Co_{0.4}N, Li_{2.6}Cu_{0.4}N, and combinations thereof. The anode may further comprise an additional material such as a metal oxide including SnO, SnO₂, GeO, GeO₂, In₂O, In₂O₃, PbO, PbO₂, Pb₂O₃, Pb₃O₄, Ag₂O, AgO, Ag₂O₃, Sb₂O₃, Sb₂O₄, Sb₂O₅, SiO, ZnO, CoO, NiO, FeO, and combinations thereof.

**Cathode.** The cathode comprises a lithium metal oxide compound. In particular, the cathode comprises at least one lithium mixed metal oxide (Li-MMO). Lithium mixed metal oxides contain at least one other metal selected from the group consisting of Mn, Co, Cr, Fe, Ni, V, and combinations thereof. For example the following lithium MMOs may be used in the cathode: LiMnO₂, LiMn₂O₄, LiCoO₂, Li₂Cr₂O₇, Li₂CrO₄, LiNiO₂, LiFeO₂, LiNiₓCo₁₋ₓO₂ (0<x<1), LiFePO₄, LiMn_{0.5}Ni_{0.5}O₂, LiMnₓCo_{y}NiₓO₂ wherein 0<x,y,z<1 and x+y+z=1, and LiMc_{0.5}Mn_{1.5}O₄ wherein Mc is a divalent metal. Mixtures of such oxides may also be used.

Either the anode or the cathode, or both, may further comprise a polymeric binder. In a preferred embodiment, the binder may be polyvinylidene fluoride, styrene-butadiene rubber, polyamide or melamine resin, and combinations thereof.

It is envisioned that the salt additives, electrolytic solutions and batteries discussed herein have a wide range of applications, including, at least, calculators, wrist watches, hearing aids, electronics such as computers, cell phones, games etc, and transportation applications such as battery powered and/or hybrid vehicles.

**Examples.** The following compositions represent exemplary embodiments of the invention. They are presented to explain the invention in more detail, and do not limit the invention.

**(1) Preparation of Electrolytic Solutions.** Two alternative solvent mixtures were blended at volume ratios of 3:4:3. The first was a blend of EC/GBL/DEC (Solvent Mixture A). The second was a blend of EC/EMC/DEC (Solvent Mixture B). At least one salt was added to portions of the solvent formulation, either or both of lithium hexafluorophosphate (LiPF₆), lithium tetrafluoroborate (LiBF₄) and lithium bis(oxalato)borate (LiBOB) to give final salt concentrations shown in Table 1. The concentrations of LiPF₆, LiBF₄ and LiBOB are given in moles per liter (M). The electrolytic solution formulations in Table 1 are labeled W for Working (Inventive) Example and C for Comparative (non-inventive) example.

**Table 1. Electrolytic Solutions:**

| | C | C | C | C | W | C |
|---|---|---|---|---|---|---|
| Experiment # | 1 | 2 | 3 | 4 | 5 | 6 |
| LiPF₆ | 1.0 M | | | 1.0 M | 0.7 M | |
| LiBF₄ | | 1.0 M | | | | |
| LiBOB | | | 1.0 M | | 0.3 M | 0.7 M |
| Solvent Mixture | A | A | A | B | B | B |

(2) Preparation of a Cathode. A positive electrode slurry was prepared by dispersing LiCoO₂ (positive electrode active material, 90 wt%), poly(vinylidenefluoride) (PVdF, binder, 5 wt%), and acetylene black (electroconductive agent, 5 wt%) into 1-methyl-2-pyrrolidone (NMP). The slurry was coated on both sides of aluminum foil, dried, and compressed to give a cathode.

(3) Preparation of an Anode. Modified natural graphite (negative electrode active material, 95 wt%) and PVdF (binder, 5 wt%) were mixed into NMP to form a negative active material slurry which was coated on both sides of copper foil, dried, and pressed to give an anode.

(4) Assembly of a Lithium Ion Secondary Battery. A separate prismatic type battery containing each of the above mentioned electrolytic solutions (Examples 1-6) was made by a conventional procedure as known in the art. The electrolytic solution of each Working Example and each Comparative Example was added to separate batteries in a dry box under an argon atmosphere. Each battery was then sealed completely.

(5) Testing of the Batteries. Evaluation of the aforementioned assembled batteries (e.g., Working Examples and Comparative Example) was carried out in the order (A) initial charging and discharging (capacity confirmation) and (B) overcharge test.

A. Capacity Confirmation. Initial charging and discharging of the aforementioned assembled batteries were performed according to the constant current charging and discharging method at room temperature. The battery was first charged to 4.2 volts (V) at a rate of 0.3C at constant current After reaching 4.2 V, the battery was discharged at a rate of 1C at constant current until the cut-off voltage 3.0 V reached. Standard capacity (C) of a nonaqueous electrolyte secondary battery was confirmed according to the battery design.

B. Overcharge Test: The aforementioned initially charged/discharged prismatic batteries containing each of the electrolytic solutions were charged to either 10 volts at a 1C rate or 5 volts at a 3C rate. The test results of overcharge are summarized in Table 2. Again, examples in Table 2 are labeled W for Working (Inventive) Example and C for Comparative (non-inventive) example.

**Table 2. Overcharge test results:**

| | C | C | C | C | W | C |
|---|---|---|---|---|---|---|
| Experiment # | 1 | 2 | 3 | 4 | 5 | 6 |
| 1C/10V | Exploded | Exploded | Passed | | | |
| 3C/5V | | | | Exploded | Passed | Passed |

Additional advantages and modifications will readily occur to those skilled in the art. Therefore, the invention in its broader aspects is not limited to the specific details and illustrative examples shown and described herein.

## Claims

1. A method of preventing overcharge in a lithium secondary battery comprising providing an electrolytic solution comprising
(a) a lithium salt of chelated orthoborates in a concentration of about 0.001 M to about 2 M;
(b) a Lithium salt different from the salt in (a) in a concentration of about 0.7 to about 1.6 M; and
(c) a non-aqueous solvent, selected from the group consisting of ethylene carbonate, propylene carbonate, butylene carbonate, dimethyl carbonate, diethyl carbonate, dipropyl carbonate, dibutyl carbonate, ethyl methyl carbonate, methyl propyl carbonate, ethyl propyl carbonate, tetrahydrofuran, 2-methyl tetrahydrofuran, 1,3-dioxolane, 1,4-dioxane, 1,2-dimethoxyethane, 1,2-diethoxyethane, 1,2-dibutoxyethane, acetonitrile, dimethylformamide, methyl formate, ethyl formate, propyl formate, butyl formate, methyl acetate, ethyl acetate, propyl acetate, butyl acetate, methyl propionate, ethyl propionate, propyl propionate, butyl propionate, methyl butyrate, ethyl butyrate, propyl butyrate, butyl butyrate, γ-butyrolactone, 2-methyl-γ-butyrolactone, 3-methyl-γ-butyrolactone, 4-methyl-γ-butyrolactone, β-propiolactone, δ-valerolactone, trimethyl phosphate, triethyl phosphate, tris(2-chloroethyl) phosphate, tris(2,2,2-trifluoroethyl) phosphate, tripropyl phosphate, triisopropyl phosphate, tributyl phosphate, trihexyl phosphate, triphenyl phosphate, tritolyl phosphate, and combinations thereof.

2. The method of claim 1, wherein the lithium salt of chelated orthoborates is selected from the group consisting of lithium bis(oxalato)borate, lithium bis(malonato) borate, lithium bis(difluoromalonato) borate, lithium (malonato oxalato) borate, lithium (difluoromalonato oxalato) borate, and combinations thereof.

3. The method of claim 1, wherein the lithium salt of (b) is selected from the group consisting of LiPF₆, LiBF₄, LiClO₄, LiAsF₆, LiTaF₆, LiACl₄, Li₂B₁₀Cl₁₀, LiCF₃SO₃; LiN(SO₂CₘF₂ₘ₊₁)(SO₂CₙF₂ₙ₊₁), and LiC(SO₂CₖF₂ₖ₊₁)(SO₂CₘF₂ₘ₊₁)(SO₂CₙF₂ₙ₊₁), wherein k = 1-10, m = 1-10, and n = 1-10, respectively; LiN(SO₂CₚF₂ₚSO₂), and LiC(SO₂CₚF₂ₚSO₂)(SO₂C_{q}F_{2q+1}) wherein p = 1-10 and q = 1-10; LiPFₓ(R_{F})₆₋ₓ and LiBF_{y}(R_{F})_{4-y}, wherein R_{F} represents perfluorinated C₁-C₂₀ alkyl groups or perfluorinated aromatic groups, x = 0-5, and y = 0-3, and combinations thereof.

4. The method of claim 1, wherein the non-aqueous solvent comprises ethylene carbonate, propylene carbonate and diethyl carbonate.

## Patentansprüche

1. Verfahren zur Verhinderung der Überladung in einer Lithium-Sekundärbatterie, umfassend die Bereitstellung einer elektrolytischen Lösung, die folgendes einschließt:
(a) ein Lithiumsalz von chelatisierten Orthoboraten in einer Konzentration von etwa 0,001 M bis etwa 2 M;
(b) ein von dem Salz in (a) verschiedenes Lithiumsalz in einer Konzentration von etwa 0,7 bis etwa 1,6 M; und
(c) ein nicht wässriges Lösungsmittel, ausgewählt aus der Gruppe, bestehend aus Ethylencarbonat, Propylencarbonat, Butylencarbonat, Dimethylcarbonat, Diethylcarbonat, Dipropylcarbonat, Dibutylcarbonat, Ethylmethylcarbonat, Methylpropylcarbonat, Ethylpropylcarbonat, Tetrahydrofuran, 2-Methyltetrahydrofuran, 1,3-Dioxolan, 1,4-Dioxan, 1,2-Dimethoxyethan, 1,2-Diethoxyethan, 1,2-Dibutoxyethan, Acetonitril, Dimethylformamid, Methylformiat, Ethylformiat, Propylformiat, Butylformiat, Methylacetat, Ethylacetat, Propylacetat, Butylacetat, Methylpropionat, Ethylpropionat, Propylpropionat, Butylpropionat, Methylbutyrat, Ethylbutyrat, Propylbutyrat, Butylbutyrat, γ-Butyrolacton, 2-Methyl-γbutyrolacton, 3-Methyl-γ-butyrolacton, 4-Methyl-γ-butyrolacton, β-Propiolacton, δ-Valerolacton, Trimethylphosphat, Triethylphosphat, Tris(2-chlorethylphosphat, Tris(2,2,2-trifluorethyl)phosphat, Triphenylphosphat, Tritolylphosphat, und Kombinationen davon.

2. Verfahren nach Anspruch 1, wobei das Lithiumsalz von chelatisierten Orthoboraten ausgewählt ist aus der Gruppe bestehend aus Lithium-bis(oxalato)borat, Lithium-bis(malonato)borat, Lithium-bis(difluormalonat)borat, Lithium(malonatooxalato)borat, Lithium(difluormalonatooxalato)borate, und Kombinationen davon.

3. Verfahren nach Anspruch 1, wobei das Lithiumsalz von (b) ausgewählt ist aus der Gruppe bestehend aus LiPF₆, LiBF₄, LiClO₄, LiAsF₆, LiTaF₆, LiAlCl₄, Li₂B₁₀Cl₁₀, LiCF₃SO₃, LiN(SO₂CₘF₂ₘ₊₁)(SO₂CₙF₂ₙ₊₁) und LiC(SO₂CₖF₂ₖ₊₁)(SO₂CₘF₂ₘ₊₁)(SO₂CₙF₂₊₁), wobei k = 1-10, m = 1-10 bzw. n = 1-10; LiN(SO₂CₚF₂ₚSO₂) und LiC(SO₂CₚF₂ₚSO₂)(SO₂C_{q}F_{2q+1}), wobei p = 1-10, und q = 1-10 ; LiPFₓ(R_{F})₆₋ₓ et LiBF_{y}(R_{F})_{4-y}, wobei R_{F} perfluorierte C₁-C₂₀-Alkylgruppen oder aromatische perfluorierte Alkylgruppen darstellt, x = 0-5, und y = 0-3, und Kombinationen davon.

4. Verfahren nach Anspruch 1, wobei das nicht wässrige Lösungsmittel Ethylencarbonat, Propylencarbonat und Diethylcarbonat umfasst.

## Revendications

1. Procédé de prévenir la surcharge dans une batterie secondaire de lithium comprenant l'étape de fournir une solution électrolytique comprenant
(a) un sel de lithium d'orthoborates chelatisés avec une concentration d'environs 0,001 M à environs 2 M ;
(b) un sel de de lithium different du sel dans (a) avec une concentration d'environs 0,7 M à environs 1,6 M ; et
(c) un solvant non aqueuse, sélectionné parmi le groupe consistant en le carbonate d'éthylène, le carbonate de propylène, le carbonate de butylène, le carbonate de diméthyle, le carbonate de diéthyle, le carbonate de dipropyle, le carbonate de dibutyle, le carbonate d'éthyle méthyle, le carbonate de méthyle propyle, le carbonate d'éthyle propyle, le tetrahydrofurane, le 2-méthyle-tetrahydrofurane, le 1,3-dioxolane, le 1,4-dioxane, le 1,2-dimethoxyéthane, le 1,2-diethoxyéthane, le 1,2-dibutoxyéthane, l'acétonitrile, le diméthyleformamide, le formiate de méthyle, le formiate d'éthyle, le formiate de propyle, le formiate de butyle, l'acétate de méthyle, l'acétate d'éthyle, l'acétate de propyle, l'acétate de butyle, le propionate de méthyle, le propionate d'éthyle, le propionate de propyle, le propionate de butyle, le butyrate de méthyle, le butyrate d'éthyle, le butyrate de propyle, le butyrate de butyle, le γ-butyrolactone, le 2-méthyle-γ-butyrolactone, le 3-méthyle-γ-butyrolactone, le 4-méthyle-γ-butyrolactone, le β-propiolactone, le δ-valérolactone, le phosphate de triméthyle, le phosphate de triéthyle, le phosphate de tris(2-chloroéthyle), le phosphate de tris(2,2,2-trifluoroéthyle), le phosphate de tripropyle, le phosphate de triisopropyle, le phosphate de tributyle, le phosphate de trihexyle, le phosphate de triphényle, le phosphate de tritolyle, et les combinaisons de ceux-ci.

2. Procédé selon la revendication 1, dans lequel le sel de lithium d'orthoborates chelatisés est sélectionné parmi le groupe consistant en le lithium de bis(oxalato)borate, le lithium de bis(malonato)borate, le lithium de bis(difluoromalonato)borate, le lithium de (malonatooxalato)borate, le lithium de (difluoromalonatooxalato)borate, et les combinaisons de ceux-ci.

3. Procédé selon la revendication 1, dans lequel le sel de lithium de (b) est sélectionné parmi le groupe consistant en LiPF₆, LiBF₄, LiClO₄, LiAsF₆, LiTaF₆, LiAlCl₄, Li₂B₁₀C₁₀, LiCF₃SO₃, LiN(SO₂CₘF₂ₘ₊₁)(SO₂CₘF₂ₘ₊₁) et LiC(SO₂CₖF₂ₖ₊₁)(SO₂CₘF₂ₘ₊₁)(SO₂CₙF₂ₙ₊₁), dans lequel k = 1-10, m = 1-10 et n = 1-10, respectivement ; LiN(SO₂CₚF₂ₚSO₂) et LiC(SO₂CpF₂ₚSO₂)(SO₂C_{q}F_{2q+1}), dans lequel p = 1-10, et q = 1-10 ; LiPFₓ(R_{F})₆₋ₓ et LiBF_{y}(R_{F})_{4-y}, dans lequel R_{F} représente des groupes d'alkyle en C₁-C₂₀ perfluorinés ou des groupes aromatiques perfluorinés, x = 0-5, et y = 0-3, et les combinaisons de ceux-ci.

4. Procédé selon la revendication 1, dans lequel le solvant non aqueuse comprend de carbonate d'éthylène, de carbonate de propylène et de carbonate de diéthyle.
